**Europäisches Patentamt**

**European Patent Office**

**Office européen des brevets**

(11) Veröffentlichungsnummer : **0 121 114**
**B1**

(12) **EUROPÄISCHE PATENTSCHRIFT**

(45) Veröffentlichungstag der Patentschrift :
**27.05.87**

(21) Anmeldenummer : **84102231.2**

(22) Anmeldetag : **02.03.84**

(51) Int. Cl.⁴ : **B 60 T 7/04**, B 60 T 13/24,
F 16 B 21/16

(54) Vorrichtung zur Verbindung eines Bremskraftverstärkers mit dem Bremspedal.

(30) Priorität : **05.03.83 DE 3307888**

(43) Veröffentlichungstag der Anmeldung :
**10.10.84 Patentblatt 84/41**

(45) Bekanntmachung des Hinweises auf die Patenterteilung : **27.05.87 Patentblatt 87/22**

(84) Benannte Vertragsstaaten :
**DE FR GB IT SE**

(56) Entgegenhaltungen :
**FR-A- 1 104 149**
**FR-A- 2 083 658**
**FR-A- 2 085 128**
**FR-A- 2 427 675**
**GB-A- 1 228 044**
**GB-A- 2 084 803**
**US-A- 2 067 681**
**US-A- 2 881 278**
**US-A- 3 257 522**
**US-A- 3 719 123**
**US-A- 3 766 802**

(73) Patentinhaber : **Adam Opel Aktiengesellschaft**
**Bahnhofsplatz 1 Postfach 1560**
**D-6090 Rüsselsheim (DE)**

(72) Erfinder : **Schupp, Edmund J., Ing. grad.**
**Lahnstrasse 18**
**D-6080 Gross-Gerau (DE)**
Erfinder : **Kernich, Hans-Georg, Ing. grad.**
**Pappelstrasse 27**
**D-6090 Rüsselsheim (DE)**

(74) Vertreter : **Baumgarten, Jochem, Dipl.-Ing. et al**
**C/O Adam Opel Aktiengesellschaft Bahnhofsplatz 1**
**Postfach 1560**
**D-6090 Rüsselsheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Vorrichtung zur Verbindung des Bremskraftverstärkers mit dem Bremspedal über die Kolbenstange in einem Kraftfahrzeug, wobei die Kolbenstange des Bremskraftverstärkers aus einem mit dem Bremskraftverstärker verbundenen einstellbaren hülsenförmigen Teil und einem mit dem auf einen Bremslichtschalter einwirkenden Bremspedal verbundenen, in das hülsenförmige Teil eingreifenden stangenförmigen Teil besteht oder umgekehrt. Eine solche Vorrichtung ist durch die US-A-3 719 123 bekanntgeworden, die jedoch nichts mit der Herstellung der Verbindung selbst zwischen Bremskraftverstärker und Bremspedal zu tun hat.

Die Herstellung der Verbindung der Kolbenstange des Bremskraftverstärkers mit dem Bremspedal erfolgt innerhalb des Fahrgastraumes und naturgemäß an schwer zugänglicher Stelle. Bei oder nach dieser Verbindung erfolgt auch die Längeneinstellung der Kolbenstange. Diese Arbeiten sind wegen der schwer zugänglichen Lage sehr umständlich und eine maschinelle Montage ist dabei so gut wie ausgeschlossen. In dem Bestreben einer rationellen, insbesondere maschinellen Fertigung muß das an schwer zugänglicher Stelle vorzunehmende Verbinden der Kolbenstange in jedem Falle vermieden werden. Dies gilt auch für das Einstellen des Bremslichtschalters, der sich ebenfalls an der schwer zugänglichen Stelle befindet. Insbesondere ist dies dann wichtig, wenn andere Montagearbeiten an benachbarten, ebenfalls schwer zugänglichen Teilen schon dadurch erleichtert werden, daß man Einbaueinheiten vorfertigt. Die Verbindung einer solchen Einbaueinheit mit den an der Karosserie befestigten Teilen verbleibt dann immer noch und kann, wie im vorliegenden Falle, sehr umständlich sein.

Der Erfindung liegt die Aufgabe zugrunde, eine Verbindung von Bremskraftverstärker und Bremspedal zu schaffen, die leicht von gut zugänglicher Seite vorgenommen werden kann bzw. sich ergibt, ohne daß Montagearbeiten an schlecht zugänglicher Stelle ausgeführt werden müssen. Gleichzeitig soll ebenso leicht die Einstellung des Bremslichtschalters vorgenommen werden können. Beides kann bzw. soll selbsttätig beim Anbau des Bremskraftverstärkers erfolgen.

Erfindungsgemäß wird dies dadurch erreicht, daß das stangenförmige Teil am freien Ende mit einer Nut versehen ist, die beim Anbringen des Bremskraftverstärkers an der Stirnwand bzw. einer Schließplatte an einer Rastfeder im hülsenförmigen Teil verrastet.

Hierbei ist natürlich Vorkehrung zu treffen, daß beim Anbau des Bremskraftverstärkers die beiden Kolbenstangenteile geführt ineinandergreifen. Zu diesem Zwecke kann z. B. das mit dem Bremspedal verbundene Teil in einer bestimmten Lage gehalten werden. Das hülsenförmige Teil am Bremskraftverstärker kann in bezug auf den am Bremskraftverstärker befindlichen büchsenförmigen Ansatz in der Länge genau eingestellt werden. Ein einfaches Ineinandergreifen der beiden Teile ergibt sich dann, wenn bei einer vom Bremskraftverstärker bis zum Bremspedal einteilig durchgehenden Kolbenstange diese eine Rastverbindung mit den Steuerkolben des Bremskraftverstärkers bildet.

In zweckmäßiger Weise wird im Zuge der Montage des Bremskraftverstärkers und der Verbindung der Kolbenstange bzw. unmittelbar danach auch die Einstellung des Bremslichtschalters vorgenommen, was erfindungsgemäß dadurch erfolgt, daß dieser nach Anbringung des Bremskraftverstärkers über die Kolbenstange von der Federkraft des Bremskraftverstärkers in seine endgültige Lage gebracht wird.

Anhand der Zeichnung werden Ausführungsbeispiele der Erfindung näher erläutert. Es zeigen

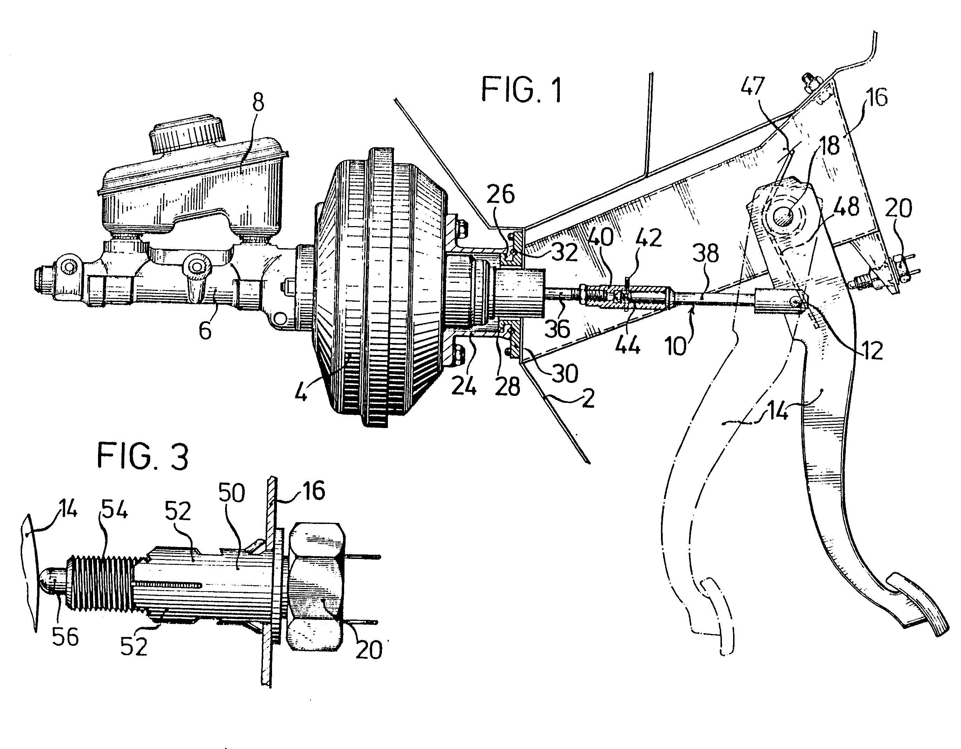

Figur 1 die Anordnung des Bremskraftverstärkers an der Stirnwand mit Bremspedal u. dgl.,

Figur 2 eine weitere Ausführungsform der Befestigung des Bremskraftverstärkers an der Stirnwand bzw. der Schließplatte,

Figur 3 die Anbringung des Bremslichtschalters am Pedalbock im vergrößerten Maßstab,

Figur 4 die Verbindung der Kolbenstange in vergrößertem Maßstab und

Figur 5 einen Schnitt nach Linie V-V in Fig. 4.

An der Stirnwand 2 eines Kraftfahrzeuges ist der Bremskraftverstärker 4 mit Hauptbremszylinder 6 und Ausgleichbehälter 8 befestigt. Die insgesamt mit 10 bezeichnete Kolbenstange des Bremskraftverstärkers 4 ist mittels eines Bolzens 12 in bekannter Weise am Bremspedal 14 angelenkt. Das Bremspedal 14 wiederum ist an dem Pedalbock 16 mittels eines Bolzens 18 schwenkbar gelagert. Am Pedalbock 16, der nur schematisch angedeutet ist und an dem sich auch die nicht dargestellten Gas- und Kupplungspedale befinden, ist auch der Bremslichtschalter 20 angebracht. Die Ausgangsstellung des Bremspedals 14 ist in ausgezogenen und die Bremsstellung in strichpunktierten Linien dargestellt.

Der Bremskraftverstärker 4 ist mit einem büchsenförmigen Ansatz 24 versehen, an dessen freiem Ende Hinterschneidungen 26 vorgesehen sind, die mit Hinterschneidungen 28 eines an der Stirnwand 2 befestigten Ansatzes 30 im Sinne eines Bajonettverschlusses zusammenwirken. Die büchsenförmigen Ansätze 24 und 30 können mit dem Bremskraftverstärker 4 bzw. mit der Stirnwand 2 wie dargestellt durch Schrauben oder durch Nieten oder in jeder anderen geeigneten Weise verbunden sein. Der Bremskraftverstärker 4 kann mittels des Bajonettverschlusses ohne Werkzeug an der Stirnwand 2 befestigt und auch wieder abgenommen werden. Anstelle der Hinterschneidungen 26, 28 können an den Ansätzen 24, 30 auch Gewindeabschnitte für eine werkzeuglose Schraubverbindung oder Ansätze und Vertiefungen für eine Schnappverbindung vorgesehen sein. Der Bremskraftverstärker 4 kann aber auch mittels Schrauben in herkömmlicher Weise an der Stirnwand 2 befestigt sein.

Die Kolbenstange 10 des Bremskraftverstärkers 4 besteht aus den beiden Teilen 36 und 38, von denen das Teil 36 vor dem Einbau des Bremskraftverstärkers 4 mit diesem bereits verbunden ist. Das Teil 38 befindet sich am Bremspedal 14. Das Teil 36 ist mit einer in axialer Richtung einstellbaren Hülse 40 versehen, die mit einer durch einen Schlitz hindurchgreifenden Rastfeder 42 versehen ist. Das Teil 38 besitzt nahe seinem vorderen konischen Ende eine umlaufende Nut 44. Bei der Montage des Bremskraftverstärkers 4 ist das Bremspedal 14 bereits mit dem Teil 38 der Kolbenstange 10 versehen, das durch eine Hilfsvorrichtung irgendwelcher Art etwa in der Richtung gehalten wird, die es später in verbundener Lage mit dem Teil 36 einnimmt.

Die Anordnung kann abweichend von der Zeichnung auch so getroffen sein, daß das Teil 38 durch die Öffnung in der Stirnwand 2 nach vorne hindurch ragt. Der Bremskraftverstärker 4 wird nun so an seine Befestigungsstelle herangeführt, daß sich das Teil 36 mit der Hülse 40 auf das Teil 38 aufschiebt. In der Endstellung rastet die Rastfeder 42 an der Hülse 40 in die Nut 44 des Teiles 38 ein, so daß die Teile 36 und 38 verbunden sind, ohne daß dabei eine Verbindung an schwer zugänglicher Stelle von Hand vorgenommen werden muß. Die Längeneinstellung der Hülse 40 kann vorher entsprechend vorgenommen werden. Die Montage kann in der Praxis mit einer Vorrichtung erfolgen, in die der Bremskraftverstärker 4 mit dem büchsenförmigen Ansatz 24 und dem auf die genaue Länge eingestellten hülsenförmigen Teil 40 eingelegt wird. Die Vorrichtung wird dann an die Stirnwand herangefahren. Während des Kuppelns der Teile 36 und 38 der Kolbenstange 10 wird das Teil 38 durch eine nicht dargestellte Vorrichtung in seiner Längsrichtung unverschiebbar gehalten, und zwar in einer solchen Lage, daß beim Kuppeln die Kolbenstange 10 in den Bremskraftverstärker zurückgedrückt wird. Nach dem Kuppeln wird nach Lösen der Vorrichtung die Kolbenstange durch die Federkraft des Bremskraftverstärkers so verschoben, daß ein im Pedalbock befestigter Bremslichtschalter funktionsgerecht eingestellt wird. Dies wird noch später erläutert.

Das Zusammenführen der beiden Teile 36 und 38 läßt sich vermeiden, wenn die Verbindung in den Bremskraftverstärker 4 hineinverlegt wird und die Kolbenstange 10 bei der Montage des Bremskraftverstärkers 4 bereits ein einziges Teil bildet. Das vordere Ende der Kolbenstange verrastet dabei mit dem Steuerkolben bzw. der Druckstange des Bremskraftverstärkers 4.

Eine Haarnadelfeder 48, deren eines Ende sich gegen einen Anschlag 47 am Pedalbock 16 legt, wirkt mit ihrem anderen Ende gegen den Bolzen 12, mit dem die Kolbenstange 10 am Bremspedal 14 angelenkt ist. Dadurch wird die Kolbenstange 10 in Richtung auf den Bremskraftverstärker 4 zu gedrückt und somit das Spiel in der Verbindung 42, 44 der Teile 36 und 38 sowie im Bremskraftverstärker 4 selbst ausgeglichen. Diese Feder 48 ist natürlich schwächer als der Bremskraftverstärker 4 entgegengesetzt wirkende Federdruck. Da die Bewegung der Kolbenstange 10 innerhalb des Bremskraftverstärkers 4 begrenzt ist, erübrigt sich ein Anschlag für das Bremspedal 14, wie er bisher üblich war, als eine Feder auf das Bremspedal 14 in Richtung vom Bremskraftverstärker 4 weg eingewirkt hat.

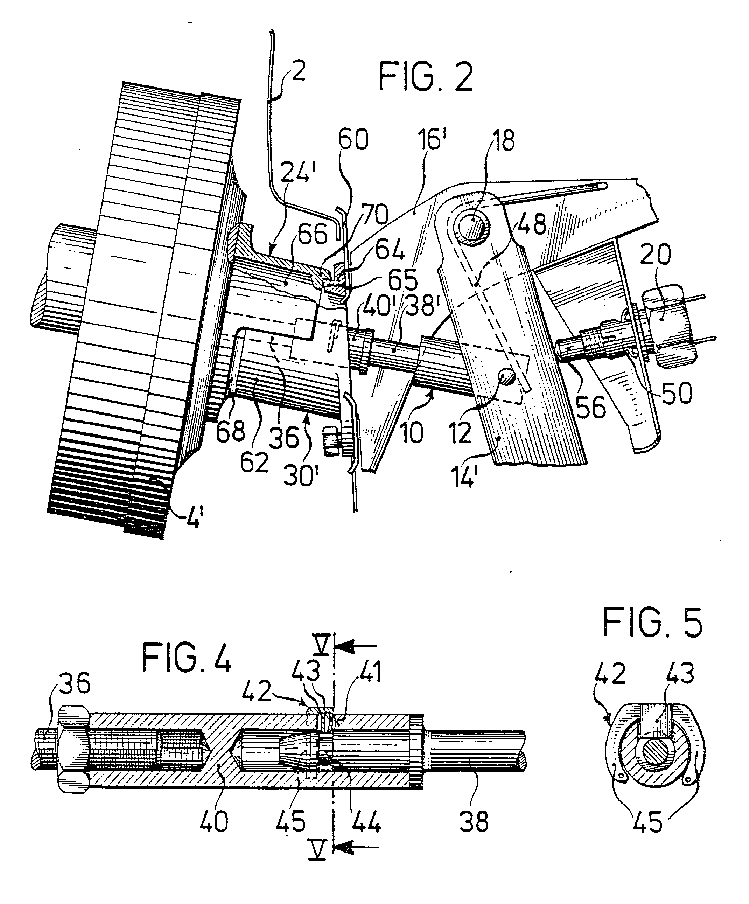

Der Bremslichtschalter 20 ist in einer am Pedalbock 16 befindlichen Hülse 50 gelagert (Fig. 3), die aus Kunststoff oder Federstahl besteht und in den Pedalbock 16 eingeklipst ist. Die Hülse 50 ist innen mit Rastmitteln 52, z. B. mit über den Umfang verteilten Rastzähnen versehen, die in das Gewinde 54 des Bremslichtschalters 20 eingreifen. Nach dem Befestigen des Bremskraftverstärkers 4 an der Stirnwand 2 und nach Entfernen der das Teil 38 haltenden Vorrichtung wird über die Kolbenstange 10 das Bremspedal 14 in seine Ausgangslage gebracht. Dabei trifft das Bremspedal 14 gegen den Schaltstift 56 des Bremslichtschalters 20, der vorher entsprechend weit in die Hülse 50 in Richtung auf die Kolbenstange 10 zu eingeschraubt wird. Das Bremspedal 14 drückt den Schaltstift 56 in den Schalter 20 hinein und verschiebt anschließend den gesamten Bremslichtschalter 20 in der Hülse 50 in seine Funktionsstellung. Die Rastzähne 52 halten den Bremslichtschalter 20 in dieser Stellung fest. Es erfolgt also auch automatisch die richtige Einstellung des Bremslichtschalters 20. Die erfindungsgemäße Anordnung ist insbesondere dann von Vorteil, wenn Pedalbock 16, die Lenkungskonsole sowie weitere Teile, wie z. B. die gesamte Armaturentafel als vorgefertigte Einheit hergestellt und an der Stirnwand befestigt wird. Dann befinden sich die hülsenförmigen Ansätze 30′ an einer mit dem Pedalbock verbundenen eine Durchbrechung in der Stirnwand 2 verschließenden Schließplatte 60 (Fig. 2). Durch die Erfindung brauchen dann nach der Montage der Einheit an dieser keine Verbindungs- und Einstellarbeiten mehr durchgeführt werden. Die Schließplatte 60 ist hier von hinten gegen eine Öffnung in der Stirnwand 2 gefahren. Die Schließplatte 60 ist mit dem mit 16′ bezeichneten Pedalbock verbunden. Am Pedalbock 16′ ist das Bremspedal 14′ mittels des Bolzens 18 gelagert. Die Feder 48 wirkt wieder auf den Bolzen 12 ein, mit dem die Kolbenstange 10 am Bremspedal 14′ angelenkt ist. Die Schließplatte 60 ist mittels nicht dargestellter Bolzen mit der Stirnwand 2 verbunden. An der Schließplatte 60 ist der Ansatz 30′ angeordnet, der in jeder geeigneten Art mit der Schließplatte 60 verbunden sein kann. Der Ansatz 30′ bildet hier einen halbkreisförmigen vorspringenden Abschnitt 62 und einen kurzen Abschnitt 64, der mit Verbindungsmitteln, z. B. nur andeutungsweise dargestellten Rastmitteln 65 versehen ist.

Der Ansatz 24′ am Bremskraftverstärker 4′ besitzt ebenfalls einen halbkreisförmigen Abschnitt 66, der oberhalb des Abschnittes 62 des Ansatzes 30' zu liegen kommt. Ein kurzer Abschnitt 68 ist ebenfalls mit Rastmitteln versehen. Rastmittel 70 sind auch jeweils am äußeren Ende der Abschnitte 62 und 66 vorgesehen, die mit den Rastmitteln 65 der kurzen Abschnitte 64 und 68 in Verbindung kommen. Die zueinander liegenden Flächen der Abschnitte 62 und 66 bilden Führungen, so daß bei der Montage des Bremskraftverstärkers 4' der Abschnitt 66 auf den Abschnitt 62 aufgesetzt und geführt an das Rastmittel 65 heran bewegt werden kann. Anstelle der Rastmittel 65 und 70 können auch andere Verbindungsmittel vorgesehen sein.

Die Verbindung von Teil 36 und Hülse 40 mit dem Teil 38 ist in Fig. 4 und 5 nochmals dargestellt. Die Hülse 40 ist in Längsrichtung einstellbar mit dem Teil 36 verbunden. Durch den Schlitz 41 in der Hülse 40 reichen zwei federnde Abschnitte 43 der Rastfeder 42 nach innen. Mit den die Hülse 40 außen teilweise umgreifenden Schenkeln 45 ist die Rastfeder 42 an der Hülse gehalten. Beim Zusammenschieben von Hülse 40 und Teil 38 rasten die federnden Abschnitte 43 in die Nut 44 des Teiles 38 ein und ergeben darin einen Spielausgleich.

**Patentansprüche**

1. Vorrichtung zur Verbindung des Bremskraftverstärkers mit dem Bremspedal über die Kolbenstange in einem Kraftfahrzeug, wobei die Kolbenstange (10) des Bremskraftverstärkers (4) aus einem mit dem Bremskraftverstärker (4) verbundenen einstellbaren hülsenförmigen Teil (36, 40) und einem mit dem auf einen Bremslichtschalter (20) einwirkenden Bremspedal (14) verbundenen, in das hülsenförmige Teil (36, 40) eingreifenden stangenförmigen Teil (38) besteht oder umgekehrt, dadurch gekennzeichnet, daß das stangenförmige Teil (38) am freien Ende mit einer Nut (44) versehen ist, die beim Anbringen des Bremskraftverstärkers (4) an der Stirnwand (2) bzw. einer Schließplatte (60) an einer Rastfeder (42) im hülsenförmigen Teil (36, 40) verrastet.

2. Vorrichtung nach Anspruch 1 mit einer vom Bremskraftverstärker bis zum Bremspedal einteilig durchgehenden Kolbenstange, dadurch gekennzeichnet, daß die mit dem Bremspedal (14) verbundene Kolbenstange (10) eine Rastverbindung mit dem Steuerkolben des Bremskraftverstärkers (4) bildet.

3. Vorrichtung nach Anspruch 1, dadurch gekennzeichnet, daß am Pedalbock (16) eine Feder (48) vorgesehen ist, die auf die Kolbenstange (10) bzw. das Bremspedal (14) in Richtung auf den Bremskraftverstärker (4) einwirkt und das Bremspedal (14) spielfrei hält.

4. Vorrichtung nach Anspruch 1 bis 3, dadurch gekennzeichnet, daß der Bremslichtschalter (20) nach Anbringung des Bremskraftverstärkers (4) über die Kolbenstange (10) von der Federkraft des Bremskraftverstärkers (4) in seine endgültige Lage gebracht wird.

5. Vorrichtung nach Anspruch 1 bis 4, dadurch gekennzeichnet, daß das stangenförmige Teil (38) durch die Öffnung in der Stirnwand (2) bzw. der Schließplatte (60) nach vorne hindurch ragt und während der Befestigung des Bremskraftverstärkers (4) von seiner Vorrichtung sowohl in radialer Richtung als auch gegen axiale Verschiebung gehalten ist.

6. Vorrichtung nach Anspruch 1 bis 5, dadurch gekennzeichnet, daß der Bremslichtschalter (20) in einer am Pedalbock (16) angebrachten Hülse (50) angeordnet ist, in der Rastmittel (52) vorgesehen sind und der Bremslichtschalter (20) Gegenrastmittel (54) aufweist und dieser in der Hülse (50) unter Überwindung der Rastmittel (52, 54) axial verschiebbar ist.

**Claims**

1. Device for connecting the brake servo unit to the brake pedal by the piston rod in a motor vehicle, the piston rod (10) of the brake servo unit (4) consisting of an adjustable sleeve-like member (36, 40) connected to the brake servo unit (4) and a rod-like member (38) which enters the sleeve-like member (36, 40) and is connected to the brake pedal (14) acting on a brake light switch (20), or vice versa, characterised in that the rod-like member (38) is provided at the free end with a keyway (44) with which engages a key (42) in the sleeve-like member (36, 40) when the brake servo unit (4) is mounted on the dashboard (2) or a closure panel (60).

2. Device according to claim 1 with a piston rod extending through in one piece from the brake servo unit to the brake pedal, characterised in that the piston rod (10) connected to the brake pedal (14) forms a locking connection with the control piston of the brake servo unit (4).

3. Device according to claim 1, characterised in that on the pedal bracket (16) is provided a spring (48) which acts on the piston rod (10) or the brake pedal (14) in a direction towards the brake servo unit (4) and keeps the brake pedal (14) free from play.

4. Device according to claims 1 to 3, characterised in that after the brake servo unit (4) is mounted over the piston rod (10), the brake light switch (20) is moved into its final position by the spring force of the brake servo unit (4).

5. Device according to claims 1 to 4, characterised in that the rod-like member (38) protrudes forwardly through the opening in the dashboard (2) or closure panel (60), and during mounting of the brake servo unit (4) is held by its device in a radial direction and also prevented from moving axially.

6. Device according to claims 1 to 5, characterised in that the brake light switch (20) is disposed in a bush (50) which is mounted on the pedal bracket (16) and in which locking means (52) are provided, and the brake light switch (20) comprises counterlocking means (54) and is axially displaceable in the bush (50), overcoming the locking means (52, 54).

## Revendications

1. Dispositif pour le raccordement du servofrein à la pédale de frein par l'intermédiaire de la tige de piston dans un véhicule automobile, la tige de piston (10) du servofrein (4) étant constituée par une partie règlable (36, 40) en forme de manchon raccordée au servofrein (4) et par une partie (38) en forme de tige s'engageant dans la partie (36, 40) en forme de manchon et raccordée à la pédale de frein (14) agissant sur un interrupteur d'éclairage stop (20), ces deux parties pouvant être montées dans l'ordre inverse, caractérisé par le fait que la partie (38) en forme de tige est munie à son extrémité libre d'une rainure (44) qui, lors du montage du servofrein (4) sur la paroi frontale (2) ou sur une plaque d'obturation (60), s'encliquette sur un ressort (42) placé dans la partie (36, 40) en forme de manchon.

2. Dispositif selon la revendication 1, comprenant une tige de piston allant d'une seule pièce du servofrein à la pédale de frein, caractérisé par le fait que la tige de piston (10) reliée à la pédale de frein (14) forme un raccordement par encliquetage avec le piston de commande du servofrein.

3. Dispositif selon la revendication 1, caractérisé par le fait que sur le support (16) de la pédale est prévu un ressort (48) qui agit sur la tige de piston (10) ou sur la pédale de frein (14) en direction du servofrein (4) et maintien sans jeu la pédale de frein (14).

4. Dispositif selon les revendications 1 à 3, caractérisé par le fait que l'interrupteur d'éclairage stop (20) après montage du servofrein (4) est amené à sa position définitive par l'effet de ressort du servofrein (4) agissant par l'intermédiaire de la tige de piston (10).

5. Dispositif selon les revendications 1 à 4, caractérisé par le fait que la partie (38) en forme de tige fait saillie vers l'avant à travers l'ouverture de la paroi frontale (2) ou de la plaque d'obturation (60) et, pendant la fixation du servomoteur (4), est maintenue par son dispositif aussi bien dans le sens radial que contre toute possibilité de déplacement axial.

6. Dispositif selon les revendications 1 à 5, caractérisé par le fait que l'interrupteur d'éclairage stop (20) est installé dans une douille (50) qui est montée sur le support (16) de la pédale et dans laquelle sont prévus des moyens d'encliquetage (52), que l'interrupteur (20) comporte des moyens d'encliquetage complémentaires (54) et que celui-ci peut être déplacé axialement dans la douille (50) en surmontant la force des moyens d'encliquetage (52, 54).

FIG. 1

FIG. 3

FIG. 2

FIG. 4

FIG. 5